Europäisches Patentamt

European Patent Office

Office européen des brevets

(19)

(11) Veröffentlichungsnummer: **0 085 311**
A2

(12) **EUROPÄISCHE PATENTANMELDUNG**

(21) Anmeldenummer: 83100229.0

(22) Anmeldetag: 13.01.83

(51) Int. Cl.³: **B 62 D 55/20**

(30) Priorität: 01.02.82 US 344672

(43) Veröffentlichungstag der Anmeldung:
10.08.83 Patentblatt 83/32

(84) Benannte Vertragsstaaten:
DE FR GB IT

(71) Anmelder: DEERE & COMPANY
1 John Deere Road
Moline Illinois 61265(US)

(72) Erfinder: Wohlford, William Paul
5102 Crow Creek Road
Bettendorf Iowa 52722(US)

(74) Vertreter: Gramm, Werner, Dipl.-Ing.
Patentanwälte Gramm + Lins Theodor-Heuss-Strasse 2
D-3300 Braunschweig(DE)

(54) **Biegeelement zur Verbindung benachbarter Glieder einer endlosen Gleiskette sowie Gleiskettenabschnitt mit einem derartigen Biegeelement.**

(57) Eine Gleiskette (22) eines Kettenfahrzeuges (10) besteht aus einer Vielzahl von Gleiskettenabschnitten, die jeweils aus einem Raupenglied (26) und einem Gleiskettenschuh (24) bestehen, die über eine Bolzenverschraubung (88, 90) gegeneinander verschraubt sind und zwischen sich zwei nebeneinander angeordnete Biegeelemente (28; 92) aufnehmen. Jedes Biegeelement (28;92) umfaßt mehrere übereinander angeordnete, biegeelastische Lamellen (68, 70, 72; 94, 96, 98), die von einem elastischen Material (84) umhüllt sind. Eine ein Spiel (D1, D2; C1, C2) aufweisende Verbindung (86,88; 100) zwischen den Lamellen (68,70,72; 94,96,98) und dem Raupenglied (26) sowie dem Gleiskettenschuh (24) wirkt derart, daß Zugkräfte sowohl bei flachliegendem als auch bei gebogenem Biegeelement (28; 92) von zumindest zwei Lamellen aufgenommen werden unter Vermeidung einer Überlastung der Lamellen in gebogenem Zustand. Jedes Raupenglied (26) weist einen ersten und einen zweiten Quersteg (46, 48) auf, die in benachbarte Zahnlücken eines Kettenrades (20) eingreifen. Eine Verschleißkappe (47) wird auf dem ersten Quersteg (46) durch die benachbarten Gleiskettenschuhe (24) in ihrer Lage gehalten, während der zweite Quersteg (48) Zähne (50) zur Reinigung der genannten Zahnlücken aufweist.

FIG. 2

EP 0 085 311 A2

Dipl.-Ing. Prof. Werner Gramm
Dipl.-~~Ing. Joachim Lins~~

D-3300 Braunschweig

Telefon:     (05 31) 8 00 79
Telex:       09 52 620

Anwaltsakte 324-52 EP-1
Datum        11.01.1983

DEERE & COMPANY
Moline, Illinois 61265
U S A

"Biegeelement zur Verbindung benachbarter Glieder
einer endlosen Gleiskette sowie Gleiskettenabschnitt
mit einem derartigen Biegeelement"

Die Erfindung betrifft ein Biegeelement zur Verbindung benachbarter Glieder einer endlosen Gleiskette insbesondere eines
Kettenfahrzeuges.

Die Erfindung betrifft ferner einen Gleiskettenabschnitt, der in
Verbindung mit einer Vielzahl gleichartiger Abschnitte eine endlose Gleiskette eines Kettenfahrzeuges bildet und zumindest ein
Biegeelement aufweist.

Herkömmliche Gleisketten für Kettenfahrzeuge bestehen aus einer
Vielzahl von Gleiskettenabschnitten, die jeweils rechte und
linke Schienenabschnitte aufweisen, die untereinander durch aus
Bolzen und Buchse bestehenden Verbindungselementen verbunden
sind, die ein Gelenk bilden und so eine Relativverschwenkung der
einzelnen Gleiskettenabschnitte untereinander ermöglichen. Ein
wesentliches Problem liegt bei diesen Ausführungsformen in dem
beim Arbeitseinsatz in den Gelenkverbindungen auftretenden
hohen Verschleiß. Hieraus resultiert eine Längung der Gleiskette, so daß diese nicht mehr zuverlässig in das antreibende Kettenrad eingreifen kann, so daß die Gleiskette bisweilen einen Zahn des Kettenrades überspringt oder völlig vom Kettenrad abspringt. Hieraus resultieren weitere Schäden.

Es ist zwar oft möglich, derartige Gleisketten durch Austausch der Bolzen-Buchsen-Gelenke oder aber durch Umdrehen der Buchsen zu überholen, jedoch sind derartige Reparaturen kostspielig und zeitaufwendig und lassen sich nur mit Spezialwerkzeugen durchführen.

Es ist bereits versucht worden, die vorstehend genannten Probleme dadurch auszuräumen, daß die genannten Verbindungsgelenke durch Biegeelemente ersetzt werden, die zwei jeweils benachbarte Gleiskettenabschnitte biegeelastisch miteinander verbinden. Meist weisen diese Biegeelemente Metalldrähte oder Metallamellen auf, die die beim Einsatz des Kettenfahrzeuges auftretenden Zugkräfte übertragen sollen. Beispiele für derartige Biegeelemente sind in den US-Patenten 1,966,450 , 2,410,507, 3,346,306 sowie 3,625,574 offenbart. Allen diesen vorbekannten Biegeelementen haftet zumindest einer der nachfolgenden Nachteile an: 1) Die die Zugkräfte übertragenden Glieder erfahren unter Belastung eine zu große Längung, so daß die Gleiskette nicht mehr einwandfrei in die Kettenräder eingreifen kann; 2) die die Zugkräfte übertragenden Glieder sind nicht ausreichend verankert; 3) unter Einwirkung der kombinierten Biege- und Zugkräfte fallen die die Zugkräfte übertragenden Glieder vorzeitig aus, und 4) diese Ausführungsformen sind in ihrer Konstruktion zu kompliziert, um in einfacher und ökonomischer Massenproduktion hergestellt werden zu können.

Der Erfindung liegt somit die Aufgabe zugrunde, ein Biegeelement für eine endlose Gleiskette zu entwickeln, das sich einfach herstellen läßt, unter Belastung keine unzulässig große Längung erfährt und eine ausreichende Lebensdauer aufweist.

Diese Aufgabe wird gemäß der Erfindung durch folgende Merkmale gelöst:

a) Zumindest zwei angenähert rechteckige, elastische Lamellen sind übereinander angeordnet und bilden einen biegeelastischen Körper;

b) jede Lamelle weist an ihren beiden sich gegenüberliegenden Enden jeweils zwei nebeneinanderliegende Bohrungen auf, die mit den entsprechenden Bohrungen der anderen Lamellen dieses biegeelastischen Körpers fluchten;

c) die Bohrungen zumindest an einem Ende von zumindest einer Lamelle sind kleiner als die entsprechenden Bohrungen der übrigen Lamellen;

d) durch die miteinander fluchtenden Bohrungen sind jeweils Verbindungselemente gesteckt, die mit ihrem Außendurchmesser dem Durchmesser der kleinsten Bohrung entsprechen und auf die Lamellen in deren Längsrichtung Zugkräfte übertragen;

e) durch das von den größeren Bohrungen gegenüber den Verbindungselementen gebildete Bohrungsspiel sind die Lamellen bei einer Biegung des Biegeelementes relativ gegeneinander in Längsrichtung verschiebbar.

Dabei können die Lamellen vorzugsweise aus rostfreiem Stahl bestehen und insbesondere in diesem Fall von einem elastischen Polymer umhüllt sein.

Um eine einwandfreie Verankerung der Lamellen sowie eine großflächige Kraftübertragung von den Verbindungselementen auf die Lamellen zu erreichen, ist es vorteilhaft, wenn die Lamellen im Bereich ihrer Bohrungen einen verstärkten Materialquerschnitt aufweisen. Dabei kann jede Lamelle einen sich über den größten Teil ihrer Länge erstreckenden Hauptabschnitt gleichförmiger
Dicke sowie sich daran anschließende Endabschnitte aufweisen,
auf die quer zur Längsrichtung der Lamelle schmale Verstärkungsstreifen aufgeklebt sind. Natürlich wäre auch eine einteilige
Lamellenausbildung denkbar.

Jedes Verbindungselement kann aus einer durch die miteinander
fluchtenden Bohrungen der Lamellen gesteckten Buchse bestehen,
die von der kleinsten Bohrung fest umschlossen ist und einen
satt eingepaßten Bolzen aufweist.

Ein Gleiskettenabschnitt, der in Verbindung mit einer Vielzahl
gleichartiger Abschnitte eine endlose Gleiskette eines Kettenfahrzeuges bildet und zumindest ein Biegeelement der vorstehend
erläuterten Ausführungsform aufweist, ist erfindungsgemäß durch
folgende Merkmale gekennzeichnet:

a) Ein Raupenglied;

b) ein Gleiskettenschuh;

c) Raupenglied und Gleiskettenschuh weisen eine erste und ·zweite
   flache Oberfläche auf, die gegeneinander weisen und zwischen
   sich das eine Ende eines Biegeelementes aufnehmen;

d) zwei erste, nebeneinander angeordnete Montagebohrungen erstrecken sich durch Raupenglied, Biegeelement und Gleiskettenschuh;

e) zwei erste Verbindungselemente erstrecken sich durch die genannten ersten Montagebohrungen und umfassen jeweils einen
   Bolzen;

f) bezogen auf das Kettenrad, um das das Biegeelement umläuft, weist dessen radial innenliegende Lamelle die Bohrungen mit dem kleinsten Durchmesser auf, während das Bohrungsspiel der radial außenliegenden Lamelle so bemessen ist, daß sich die von den Verbindungselementen übertragenen Zugkräfte so auf die beiden Lamellen verteilen, daß diese dann nicht überlastet sind, wenn das Biegeelement beim Umlauf um das Kettenrad gebogen wird.

Dabei ist es zweckmäßig, wenn das Raupenglied seitlich neben seiner ersten Oberfläche und im Abstand hiervon eine dritte Oberfläche aufweist, die zusammen mit der zweiten Oberfläche des Gleiskettenschuhs ein zweites Biegeelement einspannt, das über zwei zweite Verbindungselemente festgelegt ist.

Um jeweils gleiche konstruktive Abstände zu erhalten, ist es vorteilhaft, wenn die Verbindungselemente jeweils eine auf den Bolzen gesteckte Buchse umfassen, die sich mit ihren beiden Enden an der genannten Oberfläche des Raupengliedes sowie an der genannten Oberfläche des Gleiskettenschuhs abstützt.

Um den Biegeradius des Biegeelementes bei seinem Umlauf um das Kettenrad zu begrenzen und so die Biegebelastungen innerhalb des Biegeelementes unterhalb eines bestimmten Grenzwertes zu halten, ist es vorteilhaft, wenn die vorderen und hinteren Enden des Gleiskettenschuhs nach oben abgebogene, den Biegeelementen zugewandte Oberflächenteile aufweisen, die mit gleichartig abgebogenen Oberflächenteilen des jeweils benachbarten Gleiskettenabschnittes zusammenwirken, um so den Biegeradius des Biegeelementes bei seinem Umlauf um das Kettenrad zu begrenzen.

Weitere Merkmale der Erfindung sind Gegenstand der Unteransprüche und werden unter Hinweis auf weitere Vorteile der Erfindung anhand von Ausführungsbeispielen näher erläutert.

- 6 -

In der Zeichnung sind einige beispielsweise Ausführungsformen der Erfindung dargestellt. Es zeigen:

Figur 1     in Seitenansicht die rechte Seite eines Kettenfahrzeuges mit einer Gleiskette gemäß der Erfindung;

Figur 2     in einer Explosionsdarstellung einen Gleiskettenabschnitt, jedoch ohne Befestigungselemente;

Figur 3     eine rechte Seitenansicht von zwei auf ein Kettenrad auflaufenden Gleiskettenabschnitten;

Figur 4     in gegenüber den Figuren 2 und 3 vergrößertem
Maßstab und schematischer Darstellung einen
Längsschnitt durch ein flachliegendes, unbelastetes Biegeelement;

Figur 5     das flachliegende Biegeelement gemäß Figur 4
unter Zugbelastung;

Figur 6     das Biegeelement gemäß Figur 4 unter Zug- und
Biegebelastung; und

Figuren 7 bis 9  eine abgewandelte Ausführungsform eines
Biegeelementes in einer ausschnittsweisen Darstellung entsprechend den Figuren 4 bis 6.

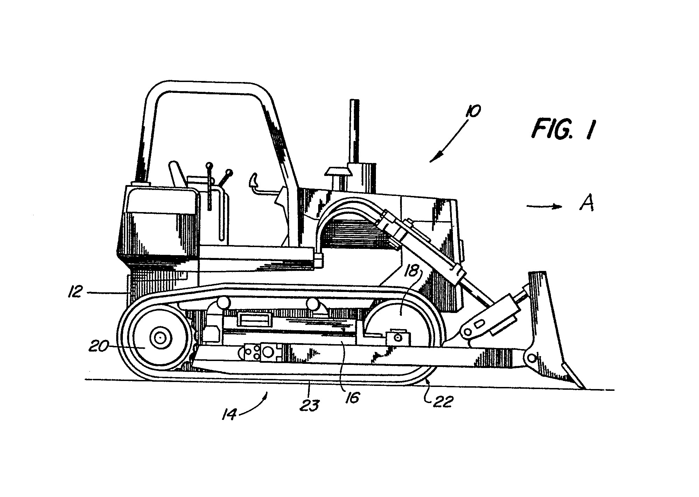

Figur 1 zeigt ein Kettenfahrzeug 10 des Typs, für den eine Gleiskette gemäß vorliegender Erfindung besonders geeignet erscheint.
Das Kettenfahrzeug 10 umfaßt einen Grundrahmen 12 auf einer
Gleiskettenkonstruktion 14, von denen nur die rechte Anordnung
dargestellt ist. Jede Gleiskettenkonstruktion 14 umfaßt einen
Gleiskettenrahmen 16, der an seinem vorderen Ende ein verschiebbares Umlenkrad 18 trägt. Ein angetriebenes Kettenrad 20 sitzt am Grundrahmen 12. Eine endlose Gleiskette 22 ist um das Umlenkrad 18 sowie das Kettenrad 20 geführt und weist einen Untertrum 23 auf, der auf dem Boden aufliegt. Bei der nachfolgenden
Beschreibung eines Gleiskettenabschnitts wird davon ausgegangen,
daß sich dieses jeweils im Untertrum der Gleiskette befindet und
von einer Person betrachtet wird, die in Richtung der Vorwärtsbewegung des Kettenfahrzeuges 10 blickt, wie es durch den
Pfeil A angedeutet ist.

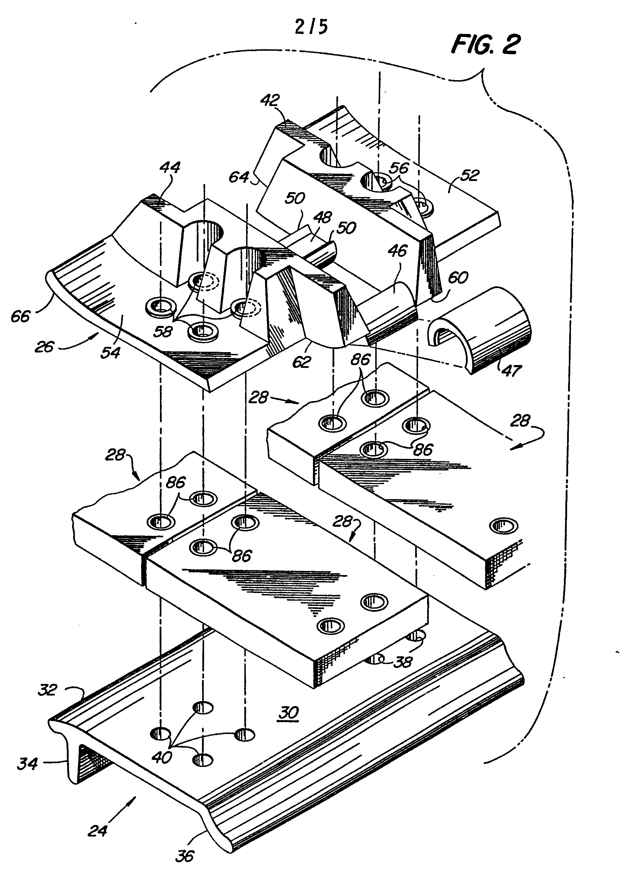

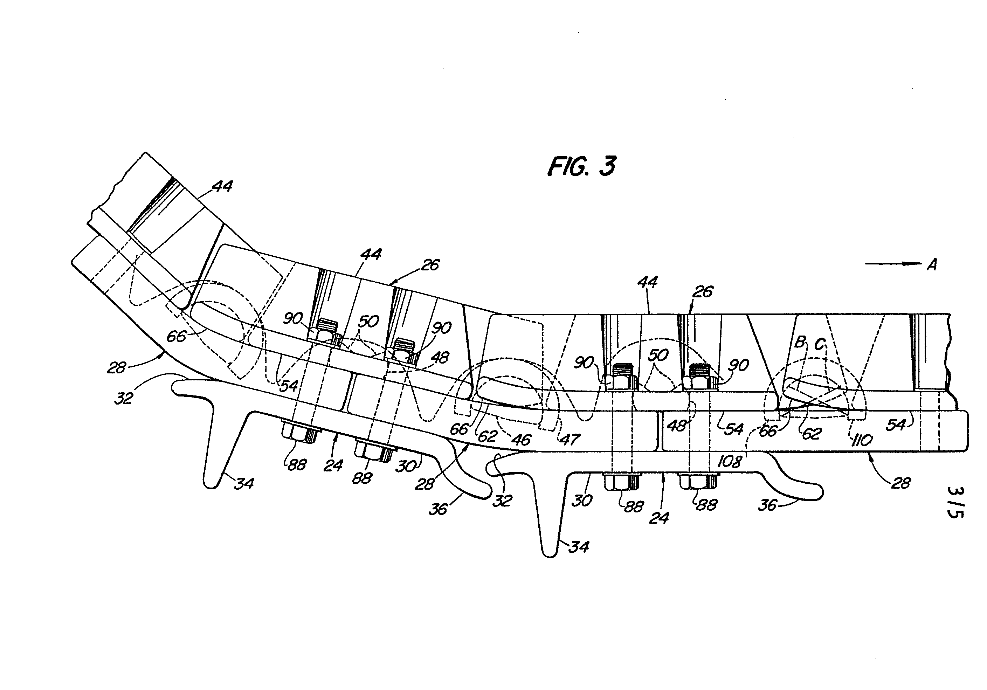

Die Figuren 2 und 3 lassen erkennen, daß die Gleiskette 22 aus
einer Vielzahl identisch ausgebildeter Gleiskettenschuhe 24,
Raupenglieder 26 und Biegeelementen 28 besteht. Jeder Gleiskettenschuh 24 ist mit einem Raupenglied 26 verschraubt, wobei zwischen diesen beiden Teilen jeweils die hinteren Enden zweier
Biegeelemente 28 sowie die vorderen Enden zweier nachfolgender
Biegeelemente 28 eingespannt sind. Die anderen Enden der genannten Biegeelemente 28 sind jeweils zwischen dem benachbarten
Gleiskettenschuh 24 und Raupenglied 26 eingespannt, so daß jeweils ein Paar Biegeelemente 28 eine biegeelastische Verbindung
zwischen zwei benachbarten Gleiskettenabschnitten herstellt.

Jeder Gleiskettenschuh 24 besteht aus einem flachen Mittelabschnitt 30, der in einen hinteren Endteil mit konvexer Oberfläche 32 und einer nach unten hängenden, quer verlaufenden
Greifleiste 34 sowie in einen vorderen, nach unten und vorn abgebogenen Endteil 36 übergeht. Letzterer untergreift jeweils den
hinteren Endteil des benachbarten Gleiskettenschuhs. In dem genannten Mittelabschnitt 30 sind ein innerer Satz von Bolzenlöchern 38 sowie ein äußerer Satz Bolzenlöcher 40 vorgesehen, die
jeweils vier Bohrungen umfassen und im Abstand nebeneinander
angeordnet sind.

Jedes Raupenglied 26 besteht aus einem mit Abstand nebeneinander
angeordneten inneren und äußeren Schienenteil 42,44, deren vorderen Enden über einen Quersteg 46 miteinander verbunden sind, der in das Kettenrad 20 eingreift, im Querschnitt angenähert halbzylindrisch ausgebildet ist und von einer Verschleißkappe 47 abgedeckt wird. Letztere ist buchsenförmig ausgebildet und ist etwas größer als ein halber Kreisring. Die beiden Schienenteile 42,44 sind außerdem durch einen zweiten Quersteg 48 miteinander verbunden, der etwa mittig zwischen den vorderen und hinteren Enden der genannten Schienenteile angeordnet ist, als Reiniger in das Kettenrad eingreift und ein Paar quer verlaufender Zähne 50 bildet. Einteilig mit den Unterseiten der Schienenteile 42,44 sind Plattenabschnitte ausgebildet, die einen inneren und äußeren flachen Mittelabschnitt 52 bzw. 54 bilden. Der innere flache Mittelabschnitt 52 weist einen Satz von vier Bolzenlöchern 56 auf, die mit den Bolzenlöchern 38 des Gleiskettenschuhs 24 fluchten. Im gleicher Weise ist der flache Mittelabschnitt 54 mit einem Satz von vier Bolzenlöchern 58 versehen, die mit den Bolzenlöchern 40 des Gleiskettenschuhs 24 fluchten. Das jeweils vordere Ende der beiden flachen Mittelabschnitte 52, 54 endet noch vor den entsprechenden vorderen Enden der Schienenabschnitte 42,44, die in diesem Bereich bogenförmig nach oben verlaufende Unterflächen 60,62 aufweisen. Auch die Unterflächen 64,66 der hinteren Enden der Schienenabschnitte 42,44 sowie der hinteren Enden der Plattenabschnitte 52,54 verlaufen bogenförmig nach oben.

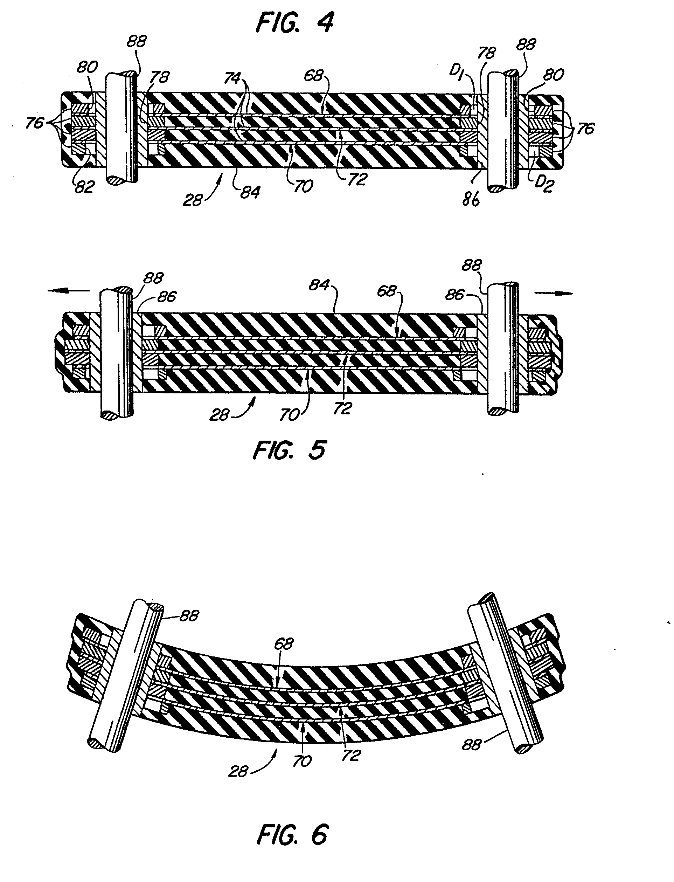

Gemäß den Figuren 4 bis 6 besteht jedes Biegeelement 28 aus einer rechteckigen oberen Lamelle 68, einer mittleren Lamelle 72 und einer unteren Lamelle 70. Jede Lamelle weist einen sich über den größten Teil ihrer Länge erstreckenden Hauptabschnitt 74 gleichförmiger Dicke auf sowie sich daran anschließende Endabschnitte 76, auf die quer zur Längsrichtung der Lamelle schmale Verstärkungsstreifen mit Montageleim aufgeklebt sind, um die Lamellenenden zu verstärken. Aus Symmetriegründen sind bei der mittleren Lamelle 72 die Verstärkungsstreifen 76 sowohl auf die Oberfläche als auch gegen die Unterfläche der Lamelle geklebt, während die Verstärkungsstreifen bei der oberen Lamelle 68 nur gegen deren Oberfläche und bei der unteren Lamelle 70 nur gegen deren Unterseite geklebt sind. Die Verstärkung der Lamellen in ihren Endbereichen durch aufgeklebte Streifen stellt eine bevorzugte Ausführungsform dar;grundsätzlich könnten aber auch entsprechend einteilig ausgebildete Lamellen Verwendung finden.

In den verstärkten Endbereichen der mittleren Lamelle 72 ist jeweils ein Paar von nebeneinander angeordneten Montagebohrungen 78 vorgesehen, wobei die obere Lamelle 68 vergleichbare Montagebohrungen 80 und die untere Lamelle 70 vergleichbare Montagebohrungen 82 aufweisen. Alle drei Bohrungspaare 78,80,82 fluchten miteinander. Der Durchmesser der Montagebohrungen 78 ist am kleinsten; der Durchmesser der Montagebohrungen 80 ist am größten.

Die Lamellen 68,70,72 können aus jedem geeigneten Material bestehen, das die erforderlichen Zugkräfte zu übertragen vermag und eine ausreichende Biegeelastizität aufweist, wenn die Gleiskette um das Kettenrad läuft. In einer bevorzugten Ausführungsform bestehen die Lamellen aus rostfreiem Stahl und sind zum Schutz gegen Abrieb von einem elastischen Polymer 84 umhüllt. Es können auch andere Metallsorten Verwendung finden; die Umhüllung 84 würde dann auch zum Schutz gegen Korrosion dienen.

Durch die miteinander fluchtenden Montagebohrungen der genannten Lamellen ist jeweils eine Buchse 86 gesteckt, die jeweils fest von den Montagebohrungen 78 der mittleren Lamelle 72 umschlossen sind. Wie die Figuren 2 und 3 erkennen lassen, ist das Paar Biegeelemente 28 jedes Gleiskettenabschnitts zwischen Raupenglied 26 und Gleiskettenschuh 24 durch insgesamt vier Bolzen 88 gehalten, die sich nach oben durch die inneren und äußeren Bohrungspaare 38,40 des Gleiskettenschuhs 24, durch die Buchsenpaare 86 des einen Endes der Biegeelemente 28 sowie durch die inneren und äußeren Bohrungspaare 56,58 des Raupengliedes 26 erstrecken. Die unbenutzten Bohrungspaare des Raupengliedes und Gleiskettenschuhs dienen zur Befestigung der freien Enden der
Biegeelemente des benachbarten Gleiskettenabschnitts. Auf die
oberen Enden der Bolzen 88 sind Muttern 90 geschraubt, so daß
Raupenglied 26 und Gleiskettenschuh 24 gegen die Buchsen 86 gezogen werden, so daß sich zwischen Raupenglied und Gleiskettenschuh eine Metall-an-Metall-Verbindung ergibt; dadurch wird
sichergestellt, daß die korrekt angezogenen Muttern 90 sich
nicht lösen, was der Fall sein könnte, wenn Raupenglied und
Gleiskettenschuh lediglich gegen die elastomerumhüllten Biegeelemente 28 verspannt würden.

Das in Figur 2 dargestellte Ausführungsbeispiel für einen Gleiskettenabschnitt ist für ein Kettenrad mit nur einem Satz Zähnen
bestimmt. Es könnten aber auch Gleiskettenabschnitte Verwendung
finden, die mit beidseitig nach außen ragenden Stegen o.dergl.
versehen sind, die zwischen die Zähne eines Kettenrades mit
einem doppelten Zähnesatz eingreifen. In diesem Fall würde dann
pro Gleiskettenabschnitt nur noch ein einziges Biegeelement benötigt, das dann so anzuordnen wäre, daß es zwischen den beiden
Zahnreihen hindurchlaufen könnte.

Bei der Darstellung gemäß Figur 4 befindet sich das Biegeelement 28 in flachliegender, unbelasteter Stellung, in der zwischen
den Buchsen 86 und den Montagebohrungen 78 der mittleren Lamelle 72 kein Bohrungsspiel, mit den Montagebohrungen 80 der oberen
Lamelle 68 ein Bohrungsspiel D1 und mit den Montagebohrungen 82
der unteren Lamelle 70 ein Bohrungsspiel D2 bestehen. Aus der
nachfolgenden Beschreibung ergibt sich, daß die an den sich
gegenüberliegenden Enden der Lamellen 68,70 vorgesehenen Bohrungsspiele D1 und D2 addiert und nur an einem der Lamellenenden vorgesehen werden könnten.

Werden über die Bolzen 88 Zugkräfte auf das Biegeelement 28
übertragen, so wird zu Beginn die gesamte Belastung von der
mittleren Lamelle 72 aufgenommen. Wenn nun unter der Belastung die mittlere Lamelle 72 in ihrer Länge elastisch nachgibt über
eine Länge, die dem Bohrungsspiel D1 entspricht, fängt auch die
obere Lamelle 68 an, die Belastung zusammen mit der mittleren
Lamelle 72 zu übernehmen. Figur 5 zeigt dieses flachliegende,
sich unter Zugbelastung befindliche Biegeelement 28.

Läuft das in Figur 5 dargestellte Biegeelement 28 um ein Kettenrad 20 um, so wird es gebogen und so durch Zug- und Biegekräfte
beaufschlagt. Bei Einsetzen der Biegung verschieben sich die
rechten und linken Enden der oberen Lamelle 68 nach rechts und
links, die entsprechenden Enden der unteren Lamelle 70 nach links
und rechts und zwar relativ gegenüber dem rechten und linken
Ende der mittleren Lamelle 72. Diese Relativverschiebungen ergeben sich infolge der Biegung des Biegeelementes 28 aufgrund
der von der oberen Lamelle 68 zur unteren Lamelle 70 zunehmenden
Biegeradien. Aufgrund der Bohrungsspiele D1 und D2 können diese
Relativverschiebungen ohne Überlastung der Endbereiche der
Lamellen erfolgen. Aufgrund der Biegung geht die Lastverteilung
von der mittleren und oberen Lamelle 72,68 über auf die mittlere
und untere Lamelle 72,70, wie es Figur 6 erkennen läßt.

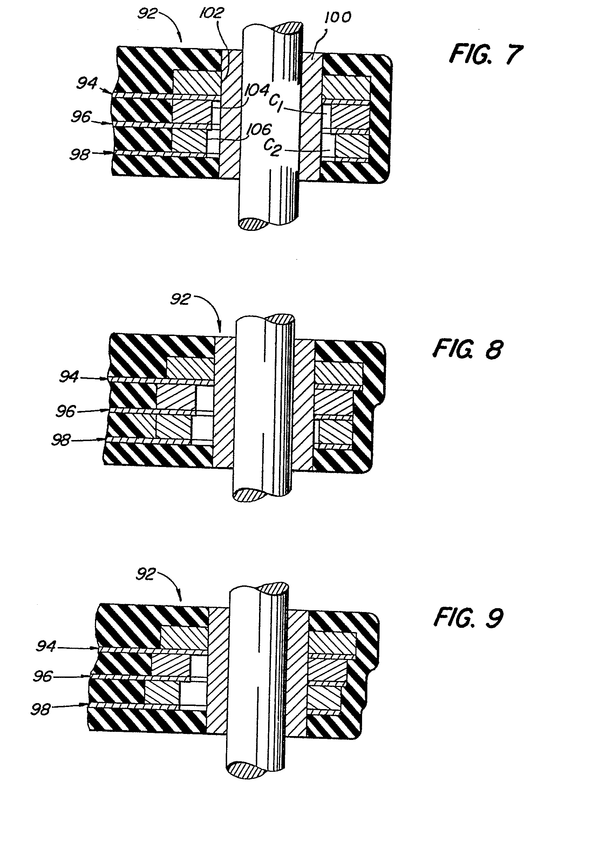

Die Figuren 7 bis 9 zeigen eine abgewandelte Ausführungsform
für ein Biegeelement 92. Auch dieses Biegeelement 92 umfaßt drei
biegeelastische, rechteckig ausgebildete Lamellen 94,96,98
(gesehen von oben nach unten). Auch hier sind entsprechende
Montagebohrungen 102 an den sich gegenüberliegenden Enden der
oberen Lamelle 94 vorgesehen, die bei diesem Ausführungsbeispiel
eine durch die Bohrungen gesteckte Buchse 100 fest umschließen,
während Montagebohrungen 104 und 106 der mittleren und unteren
Lamelle 96,98 ein zunehmendes Bohrungsspiel C1 und C2 aufweisen.
Dies läßt sich am besten der Figur 7 entnehmen, die das Biegeelement 92 in flachliegender, unbelasteter Lage im Ausschnitt
zeigt.

Wird auf das Biegeelement 92 eine Zugkraft aufgebracht, so wird diese anfangs vollständig von der oberen Lamelle 94 aufgenommen, bis diese sich elastisch über eine dem Bohrungsspiel C1 entsprechende Länge dehnt, woraufhin dann auch die mittlere Lamelle 96 beginnt, einen Teil der Belastung zu übernehmen (siehe Figur 8). Wird dann das Biegeelement 92 bei seinem Umlauf um das Kettenrad gebogen, erfolgt eine Relativverschiebung der Lamellen 94,96 und 98 gegeneinander bis zu der in Figur 9 dargestellten Endstellung, in der alle drei Lamellen Zugkräfte übertragen.

Die Anzahl der Lamellen sowie die Größe des Bohrungsspiels zwischen Buchsen und Montagebohrungen in den Lamellen bestimmen somit die Belastungsanteile zwischen den Lamellen.

Die Anzahl der gewählten Lamellen hängt von der zwischen den Gleiskettenabschnitten zu übertragenden Zugkraft sowie dem Biegeradius ab, dem das Biegeelement bei seinem Umlauf um das Kettenrad unterworfen wird.

Gemäß den Figuren 2 und 3 wird der Biegeradius der Biegeelemente 28 durch die Unterflächen 60,62 des vorderen Endes eines Raupengliedes 26 und durch die Unterflächen 64,66 des hinteren Endes des benachbarten Raupengliedes 26 begrenzt, wobei sich die Lage der beiden benachbarten Raupenglieder 26 zueinander aus dem Radius des Kettenrades 20 ergibt, in das die Raupenglieder eingreifen. Der Biegeradius der Biegeelemente wird in umgekehrter Richtung begrenzt durch das hintere, nach unten abgebogene Endteil 32 eines Gleiskettenschuhs 24, wobei die Begrenzung durch das Zusammenwirken des nach unten abgebogenen vorderen Endteils 36 eines Gleiskettenschuhs 24 mit der Greifleiste 34 des benachbarten Gleiskettenschuhs 24 erfolgt.

Die Figuren 2 und 3 lassen erkennen, daß der Quersteg 46 und damit auch seine Verschleißkappe 47 jedes Raupengliedes 26 oberhalb der sich überlappenden, vorstehend genannten Endteile 32,36 zweier benachbarter Gleiskettenschuhe 24 liegen. Die sich gegenüberliegenden Enden 108,110 der Verschleißkappe 47 sind den Endteilen 32,36 so zugeordnet, daß die Bewegung der Verschleißkappe 47 in der einen oder anderen Richtung um den Quersteg 46 herum begrenzt ist. Gemäß Figur 3 entspricht der gestrichelt eingezeichnete Querschnitt des Querstegs 46 (siehe Linie B) dem Abstand zwischen den genannten Enden 108,110 der Verschleißkappe 47, während sich ein gleicher Querschnittsabstand auf der Linie C ergibt. An allen Punkten des Querstegs 46 unterhalb der Linien B oder C ist die größte Ausdehnung des Querschnitts des Querstegs 46 größer als die Linien B oder C, oberhalb dieser beiden Linien aber kleiner. Aufgrund der begrenzten Verdrehmöglichkeit der Verschleißkappe 47 auf dem Quersteg 46 liegen die Enden 108,110 der Verschleißkappe immer unterhalb der Linien B, C, so daß die Verschleißkappe 47 so lange in ihrer dargestellten Stellung gehalten wird, wie sich die benachbarten Gleiskettenschuhe 24 in ihrer montierten Stellung befinden. Wird einer der benachbarten Gleiskettenschuhe 24 gelockert oder entfernt, können die an seinen gegenüberliegenden Enden angeordneten Verschleißkappen 47 um den Quersteg 46 in der einen oder anderen Richtung verdreht werden, so daß das eine oder andere Ende 108,110 der Verschleißkappe über die Linie B oder C gelangt. Die Verschleißkappe 47 kann dann über das über die Linien B oder C hinausragende Ende abgekippt und von dem Quersteg 46 abgehoben werden. Natürlich kann die Verschleißkappe 47 aus der in der Zeichnung dargestellten Lage auch um etwa 90° gedreht werden, um dann einfach seitlich von dem Quersteg 48 abgezogen zu werden.

Gr/Gru.

Dipl.-Ing. Prof. Werner Gramm
Dipl.-Phys. Edgar Lins
**0085311**

D-3300 Braunschweig

DEERE & COMPANY

Moline, Illinois 61265

U S A

Telefon: (05 31) 8 00 79
Telex: 09 52 620

Anwaltsakte 324-52 EP-1
Datum 11.01.1983

Patentansprüche:

1. Biegeelement (28;92) zur Verbindung benachbarter Glieder einer endlosen Gleiskette (22) insbesondere eines Kettenfahrzeuges (10), g e k e n n z e i c h n e t durch folgende Merkmale:

   a) Zumindest zwei angenähert rechteckige, elastische Lamellen (68,70,72; 94,96,98) sind übereinander angeordnet und bilden einen biegeelastischen Körper;

   b) jede Lamelle (68,70,72; 94,96,98) weist an ihren beiden sich gegenüberliegenden Enden jeweils zwei nebeneinanderliegende Bohrungen (78,80,82; 102,104,106) auf, die mit den entsprechenden Bohrungen der anderen Lamellen dieses biegeelastischen Körpers fluchten;

   c) die Bohrungen (78; 102) zumindest an einem Ende von zumindest einer Lamelle (72;94) sind kleiner als die entsprechenden Bohrungen der übrigen Lamellen (68,70;96,98);

   d) durch die miteinander fluchtenden Bohrungen (78,80,82; 102,104,106) sind jeweils Verbindungselemente (86,88;100)

- 2 -

gesteckt, die mit ihrem Außendurchmesser dem Durchmesser der kleinsten Bohrung (78;102) entsprechen und auf die Lamellen (68,70,72; 94,96,98) in deren Längsrichtung Zugkräfte übertragen;

e) durch das von den größeren Bohrungen (80,82; 104,106) gegenüber den Verbindungselementen (86,88; 100) gebildete Bohrungsspiel (D1,D2; C1,C2) sind die Lamellen (68,70; 96,98) bei einer Biegung des Biegeelementes (28;92) relativ gegeneinander in Längsrichtung verschiebbar.

2. Biegeelement nach Anspruch 1, dadurch gekennzeichnet, daß die Lamellen (68,70,72; 94,96,98) aus rostfreiem Stahl bestehen.

3. Biegeelement nach Anspruch 1 oder 2, dadurch gekennzeichnet, daß die Lamellen (68,70,72; 94,96,98) von einem elastischen Polymer (84) umhüllt sind.

4. Biegeelement nach Anspruch 1, 2 oder 3, dadurch gekennzeichnet, daß die Lamellen (68,70,72; 94,96,98) im Bereich ihrer Bohrungen (78,80,82; 102,104,106) einen verstärkten Materialquerschnitt aufweisen.

5. Biegeelement nach Anspruch 4, dadurch gekennzeichnet, daß jede Lamelle (68,70,72; 94,96,98) einen sich über den größten Teil ihrer Länge erstreckenden Hauptabschnitt (74) gleichförmiger Dicke sowie sich daran anschließende Endabschnitte (76) aufweist, auf die quer zur Längsrichtung der Lamelle schmale Verstärkungsstreifen aufgeklebt sind.

6. Biegeelement nach einem der vorhergehenden Ansprüche, dadurch gekennzeichnet, daß drei Lamellen (68,70,72) vorgesehen sind, von denen die mittlere Lamelle (72) die kleinsten Bohrungen (78) aufweist.

7. Biegeelement nach einem der Ansprüche 1 bis 5, dadurch gekennzeichnet, daß drei Lamellen (94,96,98) vorgesehen sind, wobei der Durchmesser der Bohrungen (102,104,106) an zumindest einem Lamellenende von der ersten Lamelle (94) zur dritten Lamelle (98) zunimmt.

8. Biegeelement nach einem der vorhergehenden Ansprüche, dadurch gekennzeichnet, daß jedes Verbindungselement (86,88;100) aus einer durch die miteinander fluchtenden Bohrungen (78,80, 82; 102,104,106) gesteckten Buchse (86;100) besteht, die von der kleinsten Bohrung 78; 102) fest umschlossen ist und einen satt eingepaßten Bolzen (88) aufweist.

9. Gleiskettenabschnitt, der in Verbindung mit einer Vielzahl gleichartiger Abschnitte eine endlose Gleiskette (22) eines Kettenfahrzeuges (10) bildet und zumindest ein Biegeelement (28;92) nach einem der vorhergehenden Ansprüche aufweist, g e k e n n z e i c h n e t   durch folgende Merkmale:

a) Ein Raupenglied (26);

b) ein Gleiskettenschuh (24);

c) Raupenglied (26) und Gleiskettenschuh (24) weisen eine erste und zweite flache Oberfläche (52,30) auf, die gegeneinander weisen und zwischen sich das eine Ende eines Biegeelementes (28;92) aufnehmen;

d) zwei erste, nebeneinander angeordnete Montagebohrungen (56,86,38) erstrecken sich durch Raupenglied (26), Biegeelement (28;92) und Gleiskettenschuh (24);

e) zwei erste Verbindungselemente (86,88;100) erstrecken sich durch die genannten ersten Montagebohrungen (56,86,38) und umfassen jeweils einen Bolzen (88);

- 4 -

f) bezogen auf das Kettenrad (20), um das das Biegeelement (28;92) umläuft, weist dessen radial innenliegende Lamelle (72;94) die Bohrungen (78;102) mit dem kleinsten Durchmesser auf, während das Bohrungsspiel (D2; C2) der radial außenliegenden Lamelle (70;98) so bemessen ist, daß sich die von den Verbindungselementen (86,88;100) übertragenen Zugkräfte so auf die beiden Lamellen (72,70; 94,98) verteilen, daß diese dann nicht überlastet sind, wenn das Biegeelement (28;92) beim Umlauf um das Kettenrad (20) gebogen wird.

10. Gleiskettenabschnitt nach Anspruch 9, dadurch gekennzeichnet, daß jedes Biegeelement (92) zwischen seiner radial innen und radial außenliegenden Lamelle (94,98) noch eine mittlere Lamelle (96) aufweist, deren Bohrungsspiel (C1) kleiner ist als das (C2) der radial außenliegenden Lamelle (98).

11. Gleiskettenabschnitt nach Anspruch 9, dadurch gekennzeichnet, daß jedes Biegeelement (28) noch innerhalb seiner nun mittleren Lamelle (72) eine dritte Lamelle (68) aufweist, deren Bohrungsspiel (D1) kleiner ist als das (D2) der radial außenliegenden Lamelle (70) und so bemessen ist, daß bei flachliegendem Biegeelement (28) die dritte und mittlere Lamelle (68,72) eine vorbestimmte Zugkraft, bei gebogenem Biegeelement (28) jedoch die mittlere und äußere Lamelle (72,70) die vorbestimmte Zugkraft übernehmen.

12. Gleiskettenabschnitt nach Anspruch 9, 10 oder 11, dadurch gekennzeichnet, daß das Raupenglied (26) seitlich neben seiner ersten Oberfläche (52) und im Abstand hiervon eine dritte Oberfläche (54) aufweist, die zusammen mit der zweiten Oberfläche (30) des Gleiskettenschuhs (24) ein zweites Biegeelement (28;92) einspannt, das über zwei zweite Verbindungselemente (86,88;100) festgelegt ist.

- 5 -

13. Gleiskettenabschnitt nach einem der Ansprüche 9 bis 12, dadurch gekennzeichnet; daß die Verbindungselemente (86,88;100) jeweils eine auf den Bolzen (88) gesteckte Buchse (86;100) umfassen, die sich mit ihren beiden Enden an der genannten Oberfläche (52,54) des Raupengliedes (26) sowie an der genannten Oberfläche (30) des Gleiskettenschuhs (24) abstützt.

14. Gleiskettenabschnitt nach einem der Ansprüche 9 bis 13, dadurch gekennzeichnet, daß die vorderen und hinteren Enden des Gleiskettenschuhs (24) nach oben abgebogene, den Biegeelementen (28;92) zugewandte Oberflächenteile (60,62,64,66) aufweisen, die mit gleichartig abgebogenen Oberflächenteilen des jeweils benachbarten Gleiskettenabschnittes zusammenwirken, um so den Biegeradius des Biegeelementes (28;92) bei seinem Umlauf um das Kettenrad (20) zu begrenzen.

15. Gleiskettenabschnitt nach einem der Ansprüche 9 bis 14, dadurch gekennzeichnet, daß jedes Raupenglied (26) aus zwei mit Abstand nebeneinander angeordneten Schienenteilen (42,44) besteht, die an ihrem einen Ende über einen in das Kettenrad (20) eingreifenden Quersteg (46) verbunden sind, der zwischen den beiden beidseitig neben ihm angeordneten Biegeelementen (28;92) liegt.

Patentanwälte
G r a m m   +   L i n s
Gr/Gru.

0085311

1/5

FIG. I

0085311

2 / 5

FIG. 2

FIG. 3

0085311

FIG. 4

FIG. 5

FIG. 6

0085311

5/5

FIG. 7

FIG. 8

FIG. 9